**Europäisches Patentamt**

**European Patent Office**

**Office européen des brevets**

(19)

(11) Veröffentlichungsnummer: **0 306 660**

**A2**

(12) # EUROPÄISCHE PATENTANMELDUNG

(21) Anmeldenummer: 88111122.3

(22) Anmeldetag: 12.07.88

(51) Int. Cl.4: **B60K 17/16 , B60K 17/08**

(30) Priorität: 09.09.87 DE 3730251

(43) Veröffentlichungstag der Anmeldung:
15.03.89 Patentblatt 89/11

(84) Benannte Vertragsstaaten:
**DE ES FR GB IT SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Rispeter, Siegfried**
**Uhlandstrasse 13**
**D-7122 Besigheim(DE)**

(54) **Vorrichtung zum Antrieb eines Kraftfahrzeugs.**

(57) Bei einer Antriebsvorrichtung für ein Kraftfahrzeug, mit einem Motor, einer Kupplung, einem Gangschaltgetriebe und einem Achsantrieb ist der Antriebsstrang von der Getriebeausgangswelle zu den die Fahrzeugräder antreibenden Achsantriebswellen U-förmig gestaltet. In den U-Zwischenraum ragt das am Motorgehäuse angeflanschte Kupplungsgehäuse hinein.

FIG. 1

**EP 0 306 660 A2**

## Vorrichtung zum Antrieb eines Kraftfahrzeugs

Die Erfindung betrifft eine Vorrichtung zum Antrieb eines Kraftfahrzeugs nach dem Oberbegriff des Anspruchs 1.

Für die Fahrdynamik des Kraftfahrzeugs ist es von großer Bedeutung, wie die aus Motor, Kupplung, Gangschaltgetriebe und Achsantrieb bestehende Antriebseinheit zu der von ihr angetriebenen Hinterachse oder Vorderachse angeordnet ist. Sitzt diese Antriebseinheit an der Vorderachse, so liegt der Motor vor der Vorderachse, sitzt sie an der Hinterachse so liegt der Motor hinter der Hinterachse; das Gangschaltgetriebe liegt jeweils auf der anderen Seite der Achse. Für das Fahrverhalten ist es günstig, wenn der Massenschwerpunkt des Motors möglichst nahe zu der anzutreibenden Achse liegt. Bei Erfüllung dieser Forderung wird der Vorbau vor der Vorderachse bzw. der Hinterbau hinter der Hinterachse im gleichen Maße verkleinert, wodurch der Überhangwinkel in erwünschter Weise vergrößert wird. Darüberhinaus ermöglicht diese Bauweise eine Verringerung der Pfeilung (Schräglage) der Achsantriebswellen.

Es ist die Aufgabe der Erfindung, den Antriebsstrang von der Getriebeausgangswelle zu der anzutreibenden Fahrzeugachse so zu gestalten, daß der Massenschwerpunkt des Motors möglichst nahe zu dieser Fahrzeugachse liegt.

Zur Lösung dieser Aufgabe dienen die kennzeichnenden Merkmale des Anspruchs 1. Eine bevorzugte Ausführungsform der erfindungsgemäßen Antriebsvorrichtung ist in Anspruch 2 gekennzeichnet. Wenn die Getriebeausgangswelle über einen U-förmigen Antriebsstrang, der aus einer Zwischenwelle und zwei beidseits an ihr angeordneten Stirnradpaaren gebildet ist, die zur Zwischenwelle parallelen Achsantriebswellen antreibt, läßt sich durch entsprechende Größenbemessung der Stirnradpaare der Motor beliebig nahe zu den Achsantriebswellen bzw. zur Fahrzeugachse hinrücken. Das am Motorgehäuse angeflanschte Kupplungsgehäuse kann dabei in den U-Zwischenraum des Antriebsstranges hineinragen. Ein weiterer Vorteil dieser Anordnung ist darin zu sehen, daß an der Zwischenwelle eine Aufteilung des Antriebsmoments erfolgt, die eine nur geringe Lagerbelastung verursacht.

Ein Ausführungsbeispiel ist in der Zeichnung dargestellt und wird nachfolgend erläutert.

Es zeigen:

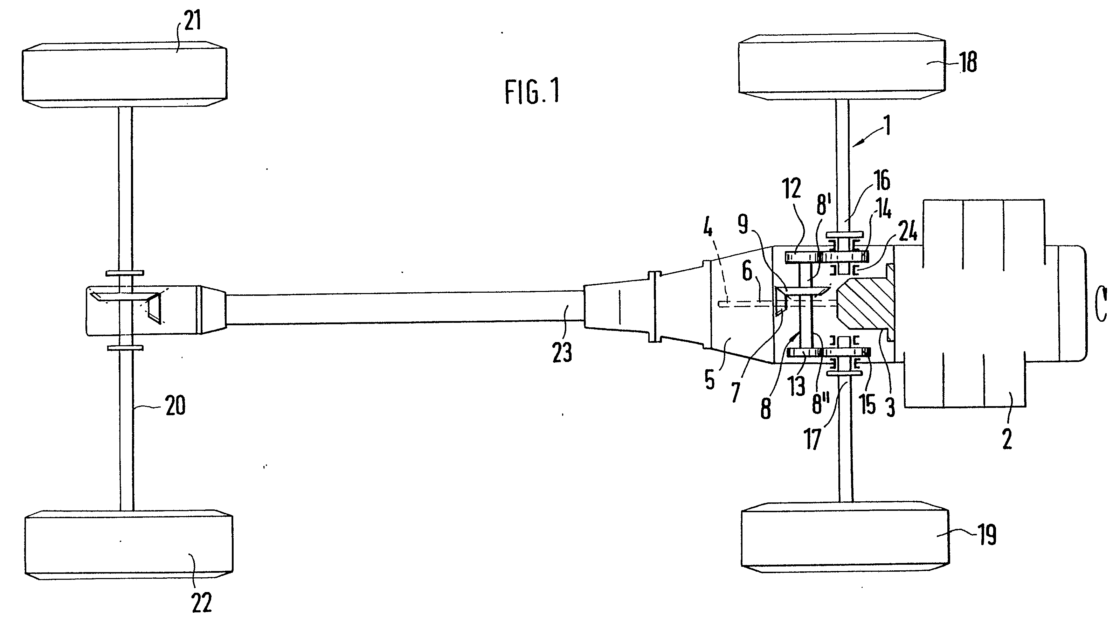

Fig. 1 Seitenansicht eines Kraftfahrzeugs,

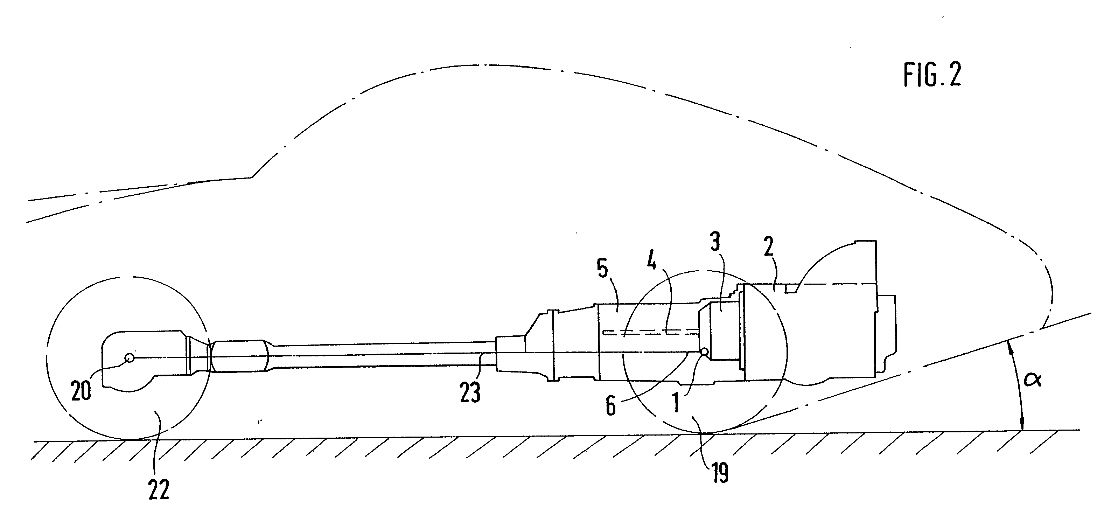

Fig. 2 Antriebsschema des Kraftfahrzeugs im Grundriß,

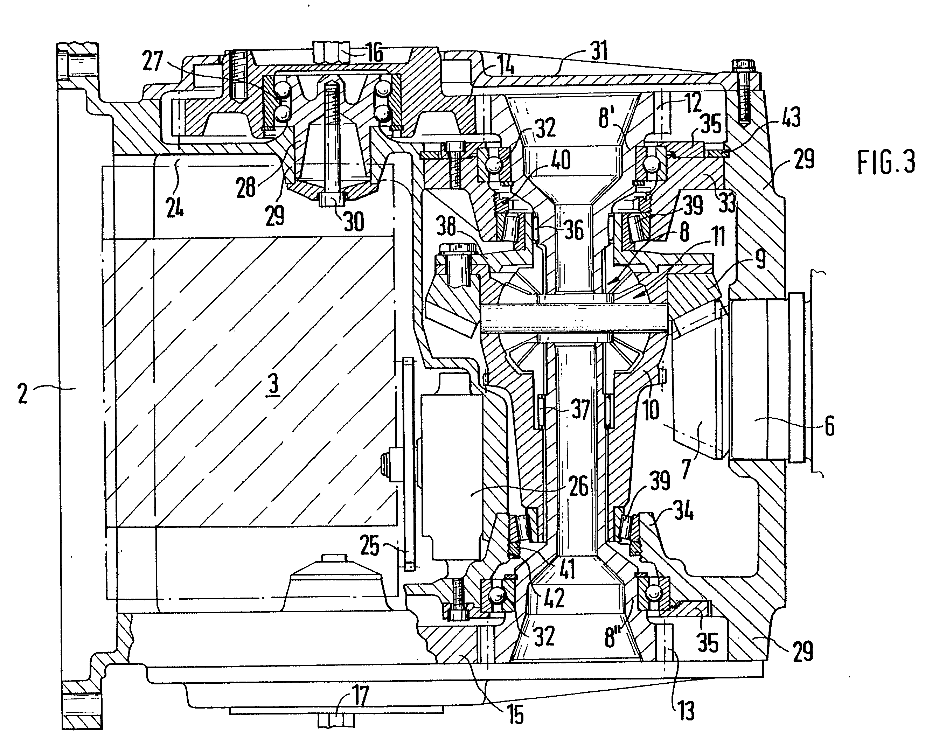

Fig. 3 Längsschnitt durch den Antriebsstrang.

Hinter der Hinterachse 1 eines Kraftfahrzeugs ist ein Antriebsmotor angeordnet, dessen Motorgehäuse 2 am nicht gezeichneten Fahrzeugrahmen befestigt ist. Am Motorgehäuse 2 ist ein Kupplungsgehäuse 3 angeflanscht; die aus seiner Stirnseite austretende, gestrichelt gezeichnete Kupplungsausgangswelle 4 ist zugleich die Eingangswelle für ein Gangschaltgetriebe 5. Räumlich unterhalb der Eingangswelle liegt die Getriebeausgangswelle 6. Stirnseitig auf der Getriebeausgangswelle 6 ist ein Kegelritzel 7 angebracht, das mit einem auf einer Zwischenwelle 8 gelagerten Kegeltellerrad 9 kämmt. Die Zwischenwelle 8 besteht aus einer kürzeren Hohlwelle 8' und einer längeren Hohlwelle 8''. Über einen an einem Ausgleichsgehäuse 10 gelagerten und mit ihm umlaufenden Ausgleichs-Kegelradsatz 11 sind die Hohlwellen 8' und 8'' an ihren einen Enden angetrieben. An ihren anderen Enden sind die Hohlwellen 8' und 8'' radial aufgeweitet und mit Stirnzahnrädern 12 und 13 versehen, die mit Stirnzahnrädern 14 und 15 größeren Durchmessers kämmen, an denen die zur Zwischenwelle 8 parallelen Achsantriebswellen 16 und 17 mit Schrauben befestigt sind.

Die Zwischenwelle 8 bildet mit den Stirnzahnrädern 12 und 14 sowie 13 und 15 einen U-förmigen Antriebsstrang zu den Achsantriebswellen 16 und 17, die die hinteren Fahrzeugräder 18 und 19 antreiben. Die Vorderachse 20 und die beiden Vorderräder 21 und 22 werden von der vorderen Getriebeausgangswelle 23 angetrieben.

Das Kupplungsgehäuse 3 ragt in den U-Zwischenraum 24 des U-förmigen Antriebsstranges hinein. Deshalb kann der Massenschwerpunkt des Motorgehäuses 2 näher zur Hinterachse 1 hingerückt sein, was für die Fahrdynamik des Kraftfahrzeugs von Vorteil ist. Der Hinterbau kann um dieses Maß kleiner sein, so daß der Überhangwinkel α in erwünschter Weise vergrößert wird. Das Abstandsmaß Motorgehäuse 2 zur Hinterachse 1 kann weiter verringert werden, indem die Durchmesser der Stirnradpaare 12, 14 und 13, 15 vergrößert und somit das Kupplungsghäuse 3 noch tiefer in den U-Zwischenraum 24 eindringen kann. Daher läßt sich die Motor-Getriebeanordnung ohne große Konstruktive Änderungen an die unterschiedlichsten Fahrzeugtypen anpassen. In dem U-Zwischenraum 24 ist neben dem Kupplungsgehäuse auch eine von der Kupplung über ein Stirnzahnrad 25 angetriebene Ölpumpe 26 angeordnet.

Die Übersetzung von der Getriebeausgangswelle 6 zu den Achsantriebswellen 16, 17 wird in zwei Stufen, nämlich einmal am Kegelritzel 7 - Kegeltellerrad 9 und an den Stirnradpaaren 12, 14 bzw. 13, 15 vorgenommen. Die Momentaufteilung erfolgt vom Ausgleichsgetriebe 11 zu gleichen Teilen auf die beiden Achsantriebswellen 16, 17. Aus diesen Gründen ist die Belastung auf die Lager des Antriebsstranges deutlich verringert.

Die zu den Achsantriebswellen 16, 17 koaxialen Stirnzahnräder 14, 15 sind mit Doppelkugellagern 27 auf Hülsen 28 gelagert, die im Achsgehäuse 29 zentriert und mit Schrauben 30 an ihm befestigt sind. Durch eine am Achsgehäuse 29 angeschraubte Deckplatte 31 sind beide Stirnzahnradpaare 12, 14 und 13, 15 nach außen hin abgedeckt. Das Stirnzahnrad 12 ist stirnseitig an der Hohlwelle 8', das Stirnzahnrad 14 an der Hohlwelle 8" angefräst. Nahe diesen Stirnzahnrädern liegen die äußeren Kugellager 32 für die Hohlwellen 8' und 8", die in am Achsgehäuse 29 festen Lagerhülsen 33, 34 sitzen und durch die mit den Lagerhülsen 33, 34 verschraubten Arretierplatten 35 axial gehalten sind. Als zweite Lager für die Hohlwellen 8" und 8' dienen Nadellager 36 und 37 im Ausgleichsgehäuse 10 und einem an ihm stirnseitig angeschraubten Lagerdeckel 38. Der Lagerdeckel 38 seinerseits und das gegenüberliegende Ende des Achsgehäuses 10 ist in Kegelrollenlagern 39 gelagert, die in den Lagerhülsen 33, 34 des Achsgehäuses 29 sitzen. Zur Einstellung des Zahnspiels an dem Kegelrad-Tellerkegelrad-Winkeltrieb 7, 9 sind die Außenringe der Kegelrollenlager 39 durch Muttern 40 und 41 verstellbar, die in die Lagerhülsen 33, 34 eingeschraubt sind. Nach Einstellen des Zahnspiels wird durch weiteres Anziehen der Mutter 40 die Lagerhülse 33 axial an einen Sprengring 43 des Achsgehäuses 29 angelegt. Nach Beenden der Einstellarbeit werden die Muttern 40, 41 durch Umkanten der an ihnen angebrachten Arretierbleche 42 in der jeweiligen Position festgehalten.

**Ansprüche**

1. Vorrichtung zum Antrieb eines Kraftfahrzeugs, mit einem Motor, einer Kupplung, einem Gangschaltgetriebe und einem Achsantrieb, dadurch gekennzeichnet, daß der Antriebsstrang von der Getriebeausgangswelle (6) zu den die Fahrzeugräder (18, 19) treibenden Achsantriebswellen (16, 17) U-förmig gestaltet ist.

2. Vorrichtung nach Anspruch 1, dadurch gekennzeichnet, daß die Getriebeausgangswelle (6) über einen Kegelrad-Winkeltrieb (7, 9) eine zu den Achsantriebswellen (16, 17) parallele Zwischenwelle (8) antreibt, an der beidseitig rechtwinklig abgehende Stirnradpaare (12, 14 und 13, 15) zum Antrieb der Achsantriebswellen (16 und 17) angeordnet sind.

3. Vorrichtung nach Anspruch 1, dadurch gekennzeichnet, daß das am Motorgehäuse (2) angeflanschte Kupplungsgehäuse (3) in dem U-Zwischenraum (24) des Antriebsstrangs (8; 12, 14 und 13, 15) angeordnet ist.

4. Vorrichtung nach Anspruch 2, dadurch gekennzeichnet, daß die Zwischenwelle (8) ein Kegelrad-Ausgleichsgetriebe (11) enthält, über das die beidseitig an der Zwischenwelle (8) befestigten Stirnzahnräder (12, 13) bzw. die von ihnen angetriebenen Fahrzeugräder (18, 19) eine Ausgleichsbewegung ausführen können.

5. Vorrichtung nach Anspruch 4, dadurch gekennzeichnet, daß die Zwischenwelle (8) aus zwei Hohlwellen (8' und 8") zusammengesetzt ist, die endseitig in Lagern (32) des Achsgehäuses (29) gelagert sind.

6. Vorrichtung nach Anspruch 5, dadurch gekennzeichnet, daß das Ausgleichsgehäuse (10) an seinen beiden Enden in Kegelrollenlagern (39) gelagert ist, die in die am Achsgehäuse (29) angebrachten Lagerhülsen (33, 34) eingepaßt sind.

7. Vorrichtung nach Anspruch 6, dadurch gekennzeichnet, daß zur Einstellung des Zahnspiels am Kegelrad-Kegeltellerrad-Winkeltrieb (7, 9) die Außenringe der Kegelrollenlager (39) und damit das Ausgleichsgehäuse (10) in seiner Axiallage durch Muttern (40) einstellbar sind, die in die Lagerhülsen (33, 34) eingeschraubt sind und die Lagerhülse (33) gegen das Achsgehäuse (29) verspannen.

8. Vorrichtung nach Anspruch 1, dadurch gekennzeichnet, daß in dem U-Zwischenraum (24) zwischen dem Achsgehäuse (29) und dem Kupplungsgehäuse (3) eine von der Kupplung angetriebene Ölpumpe (26) angeordnet ist.

FIG.1

FIG.2

FIG.3